# EUROPEAN PATENT APPLICATION

(11) **EP 1 435 725 A2**
(43) Date of publication of application: **07.07.2004**
(21) Application number: 03258169.6
(22) Date of filing: 24.12.2003
(51) Int. Cl.: H04N 1/00

(54) **E-mail facsimile machine**

(30) Priority: 03.01.2003 KR 2003000377
(71) Applicant: Samsung Electronics Co., Ltd., Suwon 442-742, Gyeonggi-do (KR)
(72) Inventor: Kim, Young-hoon, Yongin-si, Gyeonggi-do (KR)
(74) Representative: Geary, Stuart Lloyd

(57) **Abstract**

A method and an apparatus to output electronic mail (e-mail) according to degree of importance is provided. The method includes determining the degrees of importance of the e-mails; sending the e-mails whose degrees of importance are determined to another party; separating the degrees of importance of the e-mails that are sent to the other party; and printing the e-mails whose degrees of importance are separated into groups in accordance with the degrees of importance.

## Description

The present invention relates to an email facsimile machine comprising an email client means for receiving emails and printing means for printing content from received emails.

Facsimile machines send still images via communication channels by converting the still images to electrical signals, and reproduce copies of the received images using, typically, a thermal transfer recording device or an electrostatic recording device. Similar to a copy machine, a receiving unit in a facsimile machine reproduces copies of the received images using the thermal transfer recording device or the electrostatic recording device. A scanning unit, such as an image detection device, detects original images and converts the original images into electrical signals using a similar operation as an electronic camera. The scanning unit uses a linear Charge Coupled Device (CCD) or an arrangement-type optical diode. A recording unit reproduces the original images from the received electrical signals, and prints the reproduced images.

Generally, conventional facsimile machines use telephone lines as communication channels; however, e-mail facsimile machines that function in an Internet environment have been provided as a result of the development of Internet communications.

When an e-mail facsimile machine sends e-mails to a sending server, the sending server sends the e-mails to a receiving server over the Internet. An e-mail facsimile machine as a recipient of the e-mails sent, requests the e-mails from the receiving server at specific time intervals and prints the e-mails.

Accordingly, since a large number of e-mails that are received by the receiving server are continuously printed at specific time intervals, it becomes difficult for a user to sort out the e-mails and identify the e-mails that have important content. Thus, the user has to view the printed e-mails one by one and spends a large amount of time identifying and locating a specific e-mail.

An email facsimile machine, according to the present invention, is characterised by means for analysing a received email to determine a sender-determined importance level and adapting the delivery of email content to a user according to the determined importance of the email.

The adapting of the delivery of email content may comprise routing the paper output by the printer to different locations. If the machine includes an audio signal generating means, the adapting of the delivery of email content may comprise causing the audio signal generating means to output a acoustic signal in dependence on the importance of an email whose content is being or has just been or will shortly be printed.

Embodiments of the present invention will now be disclosed, by way of example, with reference to the accompanying drawings, in which:
Figure 1 is a flowchart of a method of outputting e-mails based on their importance according to the present invention; and
Figure 2 is a block diagram of an apparatus which outputs e-mails based on importance according to the present invention.

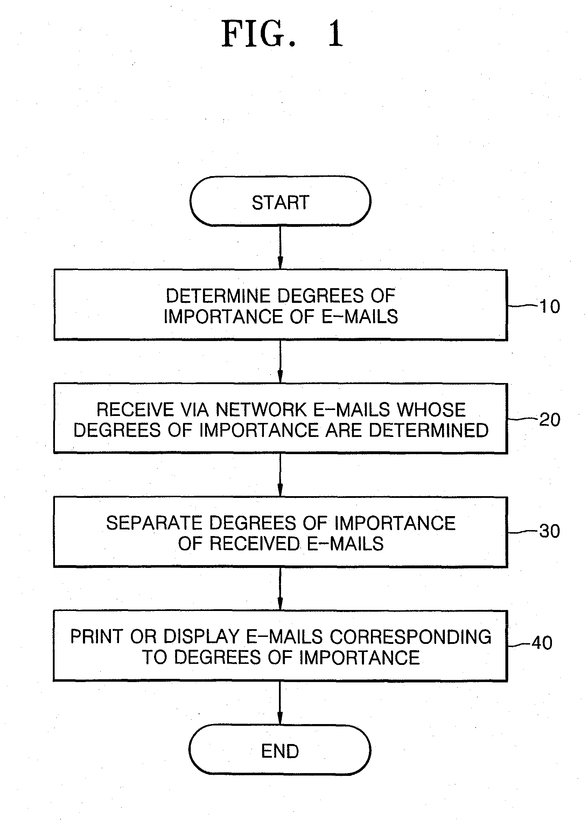

Referring to Figure 1, a method, according to the present invention, includes separating e-mails whose importance levels are determined and printing or displaying the e-mails in operations 10 through 40.

First, degrees of importance of e-mails are determined in operation 10. For example, the degree of importance of an e-mail can be one of "very important", "important" and "ordinary". When necessary, the degrees of importance of e-mails can be sub-divided, e.g. upper very important and important. When a user, sending an e-mail, assigns a degree of importance to the e-mail, its degree of importance of the e-mail is determined in accordance with the assignment given by the user.

After operation 10, the e-mails whose degrees of importance are determined are received via a network in operation 20. The e-mails are received via a network, such as the Internet, and stored in a receiving server. The e-mail facsimile repeatedly connects to the receiving server, e.g. a POP3 or IMAP server, periodically and receives the e-mails from the receiving server.

After operation 20, the emails are sorted according to their degrees of importance in operation 30. In other words, the emails are separated in accordance with the degrees of importance of the e-mails determined in operation 10.

After operation 30, the e-mails are printed based on their respective degrees of importance or brief information regarding the e-mails is displayed in operation 40. An example of printing the e-mails based on the respective degrees of importance is storing the printed papers in separate bins according to the degrees of importance of the e-mails. When a plurality of bins are arranged, the most important e-mails may be output to a first bin, the important e-mails may be output to a second bin, and the ordinary e-mails may be output to a third bin. Thus, the user can easily separate the e-mails in accordance with the degrees.

Another example of printing the e-mails based on the degrees of importance includes generating different alarms according to the degrees of importance while printing the e-mails or printing on the paper where the e-mails are printed with specific marks according to the degrees of importance.

An example of displaying brief information on the e-mails includes sequentially arranging the brief information on the e-mails according to the degrees of importance of e-mails. Thus, the user can easily recognize the degrees of importance of the e-mails and determine the e-mails that need to be printed.

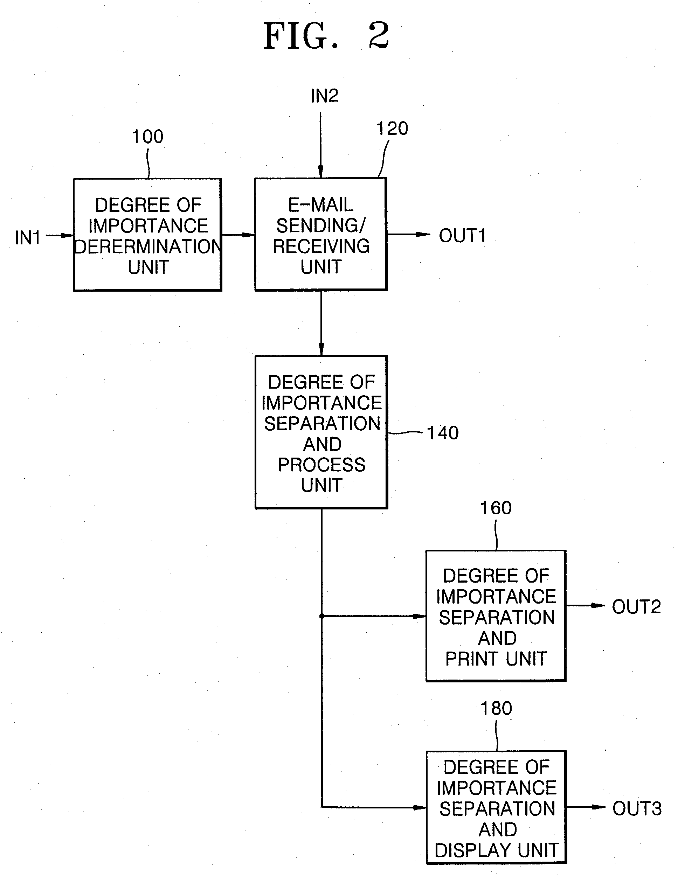

Referring to Figure 2, an apparatus, according to the present invention, includes a degree of importance determination unit 100, an e-mail sending/receiving unit 120, a degree of importance separation and process unit 140, a degree of importance separation and print unit 160, and a degree of importance separation and display unit 180.

In order to perform operation 10, the degree of importance determination unit 100 determines the degrees of importance of the e-mails and outputs the e-mails. The degree of importance determination unit 100 receives the degrees of importance of e-mails that are assigned by a user through an input terminal IN1 and determines the degrees of importance of each e-mail using information that can be recognized by e-mail facsimile machines. The degree of importance determination unit 100 outputs e-mails whose degrees of importance are determined to the e-mail sending/receiving unit 120.

In order to perform operation 20, the e-mail sending/receiving unit 120 sends/receives e-mails whose degrees of importance are determined. When the e-mail sending/receiving unit 120 receives the e-mails whose degrees of importance are determined from the degree of importance determination unit 100, the e-mail sending/receiving unit 120 sends the e-mails to an e-mail sending/receiving unit 120 of another e-mail facsimile machine through an output terminal OUT1.

In addition, the e-mail sending/receiving unit 120 of the e-mail facsimile machine receives e-mails sent from the other e-mail facsimile machine through an input terminal IN2, and outputs the received e-mails to the degree of importance separation and process unit 140. In other words, the e-mail sending/receiving unit 120 serves as an interface between e-mail facsimile machines that send/receive e-mails.

In order to perform operation 30, the degree of importance separation and process unit 140 separates the e-mails received from the e-mail sending/receiving unit 120 according to the degrees of importance and outputs the separated e-mails. Here, the degree of importance separation and process unit 140 separates the e-mails that have determined degree of importance in the determination unit 100 into groups of varying degrees of importance ranging from most important e-mails to ordinary e-mails. For example, when the degrees of importance of e-mails are separated into three groups ranging from most important, to important, to ordinary, the e-mails are separated according to their degrees of importance determined in the degree of importance separation and determination unit 100. The degree of importance separation and process unit 140 outputs the e-mails whose degrees of importance are separated to the degree of importance separation and print unit 160 and the degree of importance separation and display unit 180.

In order to perform operation 40, the degree of importance separation and print unit 160 prints the e-mails whose degrees of importance are separated into groups of varying degrees of importance. In other words, the degree of importance separation and print unit 160 receives from the degree of importance separation and process unit 140 the e-mails whose degrees of importance are separated into groups, and prints the received e-mails corresponding to the separated degrees of importance.

For example, printing the e-mails based on the degrees of importance involves printing e-mails on paper and storing the printed papers in separate bins according to the degrees of importance of e-mails. When a plurality of bins are arranged, the most important e-mails may be output to a first bin, important e-mails may be output to a second bin, and ordinary e-mails may be output to a third bin. Thus, a user can easily separate the degrees of importance of the e-mails.

Another example of printing the e-mails based on the degrees of importance includes generating different alarms according to the degrees of importance while printing the e-mails or printing specific marks on the paper on which the e-mails are printed according to the degrees of importance.

The degree of importance separation and print unit 160 outputs printing signals of the e-mails, corresponding to the degrees of importance, through an output terminal OUT2.

In addition, in order to perform operation 40, the degree of importance separation and display unit 180 displays brief information regarding the e-mails whose degrees of importance are separated into groups which corresponds to the degrees of importance. In other words, the degree of importance separation and display unit 180 receives the e-mails whose degrees of importance are separated into groups, from the degree of importance separation and process unit 140, detects the brief information on the e-mails, and displays the detected brief information corresponding to the degrees of importance.

For example, the degree of importance separation and display unit 180 may sequentially arrange the brief information on the e-mails in the order of the degree of importance. The degree of importance separation and display unit 180 outputs display signals of the brief information on the e-mails through an output terminal OUT3. The degree of importance separation and display unit 180 may be a Liquid Crystal Display (LCD).

## Claims

1. An email facsimile machine comprising an email client means for receiving emails and printing means for printing content from received emails, **characterised by** means for analysing a received email to determine a sender-determined importance level and adapting the delivery of email content to a user according to the determined importance of the email.

2. A machine according to claim 1, wherein said adapting of the delivery of email content comprises routing the paper output by the printer to different locations.

3. A machine according to claim 1 or 2, including an audio signal generating means, wherein said adapting of the delivery of email content comprises causing the audio signal generating means to output a acoustic signal in dependence on the importance of an email whose content is being or has just been or will shortly be printed.

4. A method of outputting e-mails according to the degrees of importance of the e-mails in an e-mail facsimile machine that sends and/or receives e-mails, comprising:
determining the degrees of importance of the e-mails;
receiving the e-mails whose degrees of importance are determined;
separating the received e-mails based upon the degrees of importance; and
printing the e-mails whose degrees of importance are separated into groups in accordance with the degrees of importance.

5. The method as set forth in claim 4, wherein printing the e-mails further comprises:
displaying information of the e-mails whose degrees of importance are separated into groups in accordance with the degrees of importance of the e-mails.

6. An apparatus to output e-mails according to degrees of importance of the e-mails in an e-mail facsimile machine that sends and/or receives e-mails, comprising:
a degree of importance determination unit to determine degrees of importance of e-mails, and to output the e-mails whose degrees of importance are determined;
an e-mail sending and receiving unit to send and to receive the e-mails whose degrees of importance are determined;
a degree of importance separation and process unit to separate the e-mails received from the e-mail sending and receiving unit into groups of varying degrees of importance, and to output the e-mails whose degrees of importance are separated into groups; and
a degree of importance separation and print unit to print the e-mails whose degrees of importance are separated into groups in accordance with the degrees of importance.

7. The apparatus as set forth in claim 6, further comprising:
a degree of importance separation and display unit to display information regarding the e-mails whose degrees of importance are separated in accordance with the degrees of importance.

8. The method as set forth in claim 4, wherein the degrees of importance of the e-mails are predetermined.

9. The method as set forth in claim 4, printing the e-mails comprises:
saving the received e-mails.

10. The method as set forth in claim 4, wherein the printing of the e-mails in accordance with the degrees of importance comprises printing the e-mails to separate bins according to the degrees of importance.

11. A method of sorting and outputting e-mails in an e-mail facsimile machine that sends and/or receives emails according to assigned degrees of importance, comprising:
determining the degrees of importance of each e-mail based on the assigned degrees of importance of the e-mails;
receiving the e-mails with determined degrees of importance;
separating the degrees of importance of the e-mails; and
outputting the e-mails in accordance with the degrees of importance.

12. The method as set forth in claim 11, wherein the outputting of the e-mails comprises:
generating alarms corresponding to the degrees of importance of the respective e-mails when outputting the e-mails.

13. The method as set forth in claim 5, wherein the displaying of the information regarding the e-mails comprises:
sequentially arranging the information regarding the e-mails according to the degrees of importance of the e-mails.

14. The method as set forth in claim 6, wherein the degree of importance separation and print unit outputs printing signals of the e-mails corresponding to the degrees of importance.

15. An apparatus to sort and output e-mails in an e-mail facsimile machine, comprising:
a degree of importance determination unit to determine degrees of importance of the e-mails, and to output the e-mails;
an e-mail sending and receiving unit to send and to receive the e-mails whose degrees of importance are determined;
a degree of importance separation and process unit to sort the e-mails into groups of varying degrees of importance, and to output the e-mails; and
a degree of importance separation and print unit to output the e-mails in accordance with the degrees of importance.

16. The apparatus us set forth in claim 15, wherein the degree of importance separation and print unit outputs the e-mails in accordance with the degrees of importance by displaying information regarding the e-mails in accordance with the degrees of importance.
